# EUROPÄISCHE PATENTSCHRIFT

(11) **EP 2 157 321 B1**
(45) Veröffentlichungstag und Bekanntmachung des Hinweises auf die Patenterteilung: **30.03.2011**
(21) Anmeldenummer: 08014728.3
(22) Anmeldetag: 19.08.2008
(51) Int. Cl.: F15B 13/01, F16K 17/30, F16K 31/163, F16L 29/00

(54) **Einschraubverschraubung**
Screw-in screw connection
Raccord à visser

(43) Veröffentlichungstag der Anmeldung: 24.02.2010
(73) Patentinhaber: HAWE Hydraulik SE, 81673 München (DE)
(72) Erfinder: Macit, Recept, 81673 München (DE); Heusser, Martin, Dipl.-Ing., 81245 München (DE); Manhart, Anton, 84405 Dorfen (DE)
(74) Vertreter: Grünecker, Kinkeldey, Stockmair & Schwanhäusser Anwaltssozietät

(56) Entgegenhaltungen:
- EP-A- 1 314 921
- WO-A-88/10387
- DE-A1- 2 820 811
- DE-A1- 3 722 126
- DE-A1- 4 034 667

## Beschreibung

Die Erfindung betrifft eine Einschraubverschraubung gemäß Oberbegriff des Patentanspruchs 1.

In der Hochdruck-Hydraulik werden Leitungen oder Schläuche druckdicht mit Einschraubverschraubungen angeschlossen, die beispielsweise unter dem eingebürgerten Begriff "ERMETO"-Verbindungen bekannt sind. Solche Einschraubverschraubungen, insbesondere der Einschraubkörper, unterliegen bestimmten Standards oder sind sogar genormt, wobei es z. B. gerade Einschraubverschraubungen und abgewinkelte Einschraubverschraubungen gibt. Der Einschraubkörper wird mit einem Ende abdichtend in eine Gewindebohrung eines Blocks eingeschraubt, (einen Ventilblock, ein Zylindergehäuse, oder dergleichen), während an das andere Ende die Leitung oder der Schlauch mittels einer Überwurfmutter und eines innen liegenden Schneidringes angeschlossen wird. Die Schraubhandhabe ist als Sechskant ausgebildet. Der Einschraubkörper ohne jegliche Ventilfunktion bildet den Längsdurchgang und somit die druckfeste Strömungsverbindung. Einschraubkörper für solche Einschraubverschraubungen sind kostengünstig in unterschiedlichen Abmessungen erhältlich oder einfach herstellbar.

Die aus DE-A-37 22 126 bekannte Einschraubverschraubung ermöglicht eine wahlweise aktiv steuerbare Ventilfunktion, nämlich die eines druckabhängig entsperrbaren Rückschlagventils oder Lasthalteventils eines Hydroverbrauchers. Am als Topfkolben ausgebildeten Ventilelement ist integral ein Ventilelement-Stellkolben angeformt, der in einer Ringkammer abgedichtet verschiebbar ist. Der die Ringkammer bildende Einschraubkörper weist zusätzlich den vom Außenumfang zum Längsdurchgang führenden Steuerkanal auf, der in die Ringkammer mündet, und zwar auf der Öffnungsseite des Ventilelement-Stellkolbens. Das blockseitige Ende des Einschraubkörpers ist durch einen zusätzlichen Dichtbereich von der Mündung des Steuerkanals isoliert. Das Topfkolbenende weist angrenzend an die konische Sitzfläche ein stumpfes Ende auf, sodass beim Entsperren durch Steuerdruckbeaufschlagung des Ventilelement-Stellkolbens der Durchströmquerschnitt durch den Ventilsitz schlagartig geöffnet wird.

Bei der aus DE-A-28 20 911 bekannten Einschraubverschraubung ist eine passive Schlauchbruchsicherungs-Funktion vorgesehen. Vom Außenumfang des Einschraubkörpers führt ein Steuerkanal über eine einstellbare Drossel zur Stromaufseite des Ventilsitzes im Längsdurchgang, um eine teilweise Druckentlastung des Ventilelements zu bewirken, sodass dieses aus der normalen, durch Federkraft eingestellten Öffnungsstellung bereits bei einer sehr kleinen Druckdifferenz schlagartig in die Schließstellung auf den Ventilsitz gebracht wird. Die Ventilfunktion ist passiv und rein Differenzdruckabhängig.

Aus DE-B-25 00 552 ist es bekannt, vor dem in eine Blockbohrung eingeschraubten Einschraubkörper der Einschraubverschraubung zum Erzielen einer Ventilfunktion eine Einschraubventilpatrone einzusetzen. Zum Unterbringen dieser Einschraubventilpatrone wird zusätzlich zum Einschraubkörper Einbauraum und entsprechende Bearbeitungsschritte benötigt. Deshalb hat sich das Prinzip entwickelt, den erforderlichen Einschraubkörper nicht nur als reinen Strömungsdurchgang zu nutzen, sondern in diesen ohne zusätzlichen Einbauraum und zusätzliche Bearbeitungsschritte im Block eine Ventilfunktion zu integrieren.

Eine Einschraubverschraubung mit in den Einschraubkörper integrierter Ventilfunktion offenbart EP 1503121 A. Die Außenabmessungen des Einschraubkörpers sind unverändert, hingegen ist der Längsdurchgang bearbeitet, um einen Ventilsitz und das Ventilelement unterbringen zu können. Diese Ventilfunktion ist eine passive Rohrbruch-Sicherung und resultiert aus dem Ansprechen des Ventilelements auf einen Druckunterschied und/oder bestimmte Strömungsverhältnisse.

Ähnlich wird in EP 1 314 921 A2 ein Rohrbruchventil in das blockseitige Ende des Einschraubkörpers der Einschraubverschraubung eingegliedert, wobei ein Großteil der für die Ventilfunktion integrierten Komponenten vom blockseitigen Ende des Einschraubkörpers vorsteht. Auch diese Ventilfunktion ist passiv, d. h. das Rohrbruchventil spricht auf einen bestimmten Druckabfall oder eine bestimmte Strömungsdynamik in einer Notfallsituation an, um dann den Längsdurchgang des Einschraubkörpers in einer Strömungsrichtung vollständig oder bis auf einen Leckagedurchgang abzusperren.

Ähnlich ist in WO 02/16813 A1 eine Rohrbruch-Ventilfunktion in den Einschraubkörper der Einschraubverschraubung so integriert, dass Komponenten für diese Ventilfunktion am blockseitigen Ende des Einschraubkörpers vorstehen. Dies erfordert es, in der Gewindebohrung des Blocks vor dem blockseitigen Ende des Einschraubkörpers genügend Freiraum für die vorstehenden Komponenten vorzusehen. Solange das Rohrbruchventil nicht anspricht, ist in jeder Strömungsrichtung eine Strömung zugelassen.

Der Erfindung liegt die Aufgabe zugrunde, eine Einschraubverschraubung dieser Art zu schaffen, die unter Beibehaltung der oben geschilderten Vorteile be einer wahlweise aktiv steuerbare Ventilfunktion eine Mengenregelfunktion bzw. einen hubabhängig zu variierenden Durchströmquerschnitt durch den Ventilsitz ermöglicht.

Die gestellte Aufgabe wird mit den Merkmalen des Patentanspruchs 1 gelöst.

Da die integrierte Ventilfunktion über den Steuerkanal vom Außenumfang des Einschraubkörpers bis in den Längsdurchgang wahlweise und aktiv steuerbar ist, hat die Einschraubverschraubung einen erheblich erweiterten, kostengünstigen und Einbauraum sparenden Einsatzbereich. Der Steuerkanal kann im Strömungsdurchgang an der Blockseite oder an der der Blockseite abgewandten Seite des Ventilsitzes münden, im letztgenannten Fall vorzugsweise im Bereich des Hinterendes des Ventilelements. Dies bedeutet, dass je nach der Strömungsrichtung, für die die Ventilfunktion im Einschraubkörper aktiv steuerbar sein soll, der Steuerkanal relativ kurz und im Wesentlichen radial direkt in den Längsdurchgang mündet, oder von der Mündung im Fleisch des Einschraubkörpers unter der Schraubhandhabe durch bis zu einer Mündung in der Nähe des dem blockseitigen Ende abgewandten Endes verläuft. Zweckmäßig werden mehrere gleichartige Steuerkanäle in Umfangsrichtung verteilt vorgesehen, um mit kleinen Kanalquerschnitten gegebenenfalls größere Steuerölmengen oder Steuerölmengen ohne nennenswerten Drosseleffekt verarbeiten zu können. Die Außenabmessungen des Einschraubkörpers, die Kopplungselemente für die Leitung oder den Schlauch, und die Blockbohrung, entsprechen beispielsweise den Vorschriften ISO 3691, oder DIN 3852. Um beispielsweise bei einem Lasthalteventil eine Mengenregelfunktion zu erhalten bzw. den Durchströmquerschnitt durch den Ventilsitz hubabhängig zu variieren, und nicht nur schlagartig zu öffnen oder zu schließen, ist am Topfkolbenende angrenzend an die Sitzfläche eine Eintauchverlängerung vorgesehen, deren Außendurchmesser etwa den Innendurchmesser des Ventilsitzes entspricht, wobei sich diese Eintauchverlängerung, in einem Axialschnitt, zweckmäßig in Eintauchrichtung verjüngt. Beim Öffnungs- bzw. Schließhub des Ventilelements wird der Durchströmquerschnitt durch den Ventilsitz nicht schlagartig freigegeben, sondern allmählich, um die Menge zu regeln und/oder den Querschnitt hubabhängig nach vorbestimmten Kriterien zu variieren.

Die Mengenregelung lässt sich noch verfeinern, wenn von der Verlängerung durch den Sitz greifende, in Umfangsrichtung verteilte Schenkel vorstehen, zwischen denen Mengensteuerschlitze definiert sind, die mit dem Innendurchmesser des Ventilsitzes bzw. der Sitzkante des Ventilsitzes blendenartig zusammenwirken, wenn das Ventilelement relativ zum Ventilsitz verstellt wird.

Additiv oder alternativ können auch in der hohlen Eintauchverlängerung Querdurchgänge zur Mengensteuerung vorgesehen sein, die mit der Sitzkante des Ventilsitzes blendenartig zusammenarbeiten.

Bei einer zweckmäßigen Ausführungsform ist die aktiv und wahlweise steuerbare Ventilfunktion die eines Lasthalteventils mit Druckbegrenzung in Sperrrichtung. Hierbei ist in der Eintauch-Verlängerung des Ventilelements eine innen liegende Kammer vorgesehen, die an einer Seite mit dem Längsdurchgang und an der anderen Seite über einen Drosseldurchgang mit dem Hinterende des Ventilelements kommuniziert. In der Kammer ist ein federbelastetes Ventilglied eines Druckbegrenzungsventils enthalten, das druckabhängig zur Wirkung kommt. Die wahlweise aktive Entsperrung der Lasthalteventilfunktion wird mit einem Drucksignal aus dem Steuerkanal gesteuert, und zwar entweder in einem Auf/Zu-Zyklus oder in dosierter Form.

Die integrierte wahlweise aktiv steuerbare Ventilfunktion der Einschraubverschraubung ist zweckmäßig eine voll oder dosiert blockierbare Rückschlagventilfunktion oder eine voll oder dosiert entsperrbare Lasthalteventilfunktion, letztere mit oder ohne Druckbegrenzung in Sperrrichtung. Die aktive Steuerung erfolgt mit Druckaufbau oder einem Drucksignal im Steuerkanal. Vorteilhaft kann hierbei ein zusätzlicher Dichtbereich am blockseitigen Ende des Einschraubkörpers sein. Dies ist beispielsweise zweckmäßig für eine Kransteuerung oder einen Hubmodul eines Flurförderfahrzeugs, da bei gleicher Funktionalität eine separate Baugruppe wegfällt, Einbauraum gespart wird und zusätzliche Bearbeitungsschritte zu deren Unterbringung und Montage entfallen.

Der Ventilsitz kann aus dem Material des Einschraubkörpers gearbeitet oder in einem Einsatzteil im Längsdurchgang gebildet sein.

Um, wie es für manche Ventilfunktionen zweckmäßig ist, beispielsweise bei einem Lasthalteventil, eine Mengenregelfunktion zu erhalten bzw. den Durchströmquerschnitt durch den Ventilsitz hubabhängig zu variieren, und nicht nur schlagartig zu öffnen oder zu schließen, ist am Topfkolbenende angrenzend an die Sitzfläche eine Eintauchverlängerung vorgesehen, deren Außendurchmesser etwa dem Innendurchmesser des Ventilsitzes entspricht, wobei sich diese Eintauchverlängerung, in einem Axialschnitt, zweckmäßig in Eintauchrichtung verjüngt. Beim Öffnungs- bzw. Schließhub des Ventilelements wird der Durchströmquerschnitt durch den Ventilschlitz nicht schlagartig freigegeben, sondern allmählich, um die Menge zu regeln und den Querschnitt hubabhängig nach vorbestimmten Kriterien zu variieren.

Für die wahlweise steuerbare Ventilfunktion ist es von Vorteil, wenn der Steuerkanal im Längsdurchgang in einem Ringraum an der Blockseite oder an der der Blockseite abgewandten Seite des Ventilsitzes mündet. In dem Ringraum ist ein Ventilelement-Stellkolben, z. B. ein Ringkolben, abgedichtet verschiebbar, der eine vom Steuerdrucksignal aus dem Steuerkanal entweder in Schließrichtung oder in Öffnungsrichtung des Ventilelements beaufschlagbare Ringfläche definiert, mit der eine das Ventilelement relativ zum Ventilsitz beeinflussende Kraft auf das Ventilelement ausübbar oder abbaubar ist. Diese Kraft kann für nur Auf/Zu-Bewegungen des Ventilelements jeweils mit einem vorbestimmten Wert aufgebaut oder vollständig abgebaut werden, oder alternativ in dosierter Form, um eine regelnde oder dosierende Steuerung der Ventilfunktion durchzuführen.

Eine weitere, besonders zweckmäßige Ausführungsform der Erfindung betrifft eine Einschraubverschraubung für einen Hubsteuermodul eines Gabelstaplers, wobei der Einschraubkörper mit der wahlweise aktiv steuerbaren Ventilfunktion als gegen Entsperren blockierbares Rückschlagventil und/oder Lasthalteventil benutzt wird. An der dem Sitz abgewandten Seite des Einschraubkörpers ist eine Arbeitsleitung zu einem Hubzylinder angeschlossen, während die dem Sitz zugewandte Seite des Einschraubkörpers im Block an ein Richtungssteuerventil angeschlossen ist. Der Steuerkanal wird im Block wahlweise mit Steuerdruck beaufschlagt, abgesperrt oder druckentlastet, und zwar über ein Magnetschaltventil in einem Abströmweg zu einer Rücklaufleitung. Das Magnetschaltventil, z. B. ein Sitzventil, ist mit einem Sitzbelegungsschalter und/oder einem Betriebsschalter und/oder einem Notaus-Schalter des Gabelstaplers so verbunden, dass es in normalem Betriebszustand bestromt und auf Durchgang geschaltet ist, hingegen bei einer Notaus-Situation, bei nicht belegtem Sitz, oder bei Betriebsschalter auf Aus absperrt. Die Druckentlastung des Steuerkanals, die das Rückschlagventil entsperren lässt, erfolgt, vorzugsweise, über nur in Steuerstellungen des Richtungssteuerventils durchgängige Strömungswege. In der absperrenden Neutralstellung fungiert das Rückschlagventil als Lasthalteventil. Hier ist auf kostengünstigem und montagefreundlichem Weg ohne zusätzlichen Einbauraum und zusätzliche Bearbeitungsschritte der Einschraubverschraubung die wichtige, aktiv steuerbare Ventilfunktion zugeordnet, mit der sichergestellt ist, dass bei nicht belegtem Sitz, bei Betätigung des Notaus-Schalters oder bei nicht betätigtem Betriebsschalter der Hubzylinder weder selbsttätig unter der Last noch bei einer Betätigung des Richtungssteuerventils aus der Neutralstellung in eine Steuerstellung verstellt werden kann.

Anhand der Zeichnungen werden Ausführungsformen des Erfindungsgegenstandes erläutert. Es zeigen:
- Fig. 1: einen Längsschnitt einer Einschraubverschraubung für die Hochdruck-Hydraulik, in drucklosem Zustand,
- Fig. 2: eine symbolische Darstellung der in der Einschraubverschraubung von Fig. 1 integ- rierten wahlweise aktiv steuerbaren Ventilfunktion,
- Fig. 3: einen Längsschnitt durch eine andere Ausführungsform einer Einschraubver- schraubung,
- Fig. 4: eine symbolische Darstellung der in Fig. 3 vorgesehenen Ventilfunktion,
- Fig. 5: einen Längsschnitt einer weiteren Ausführungsform einer Einschraubverschrau- bung,
- Fig. 6: eine Symboldarstellung der in Fig. 5 vorgesehenen Ventilfunktion, und
- Fig. 7: ein Blockschaltbild eines Hubmoduls eines Gabelstaplers mit einer Einschraubver- schraubung, die in dem Gabelstapler eine Sicherheitsfunktion erfüllt, und bei- spielsweise der Ausführungsform in den Fig. 1 und 2 entspricht.

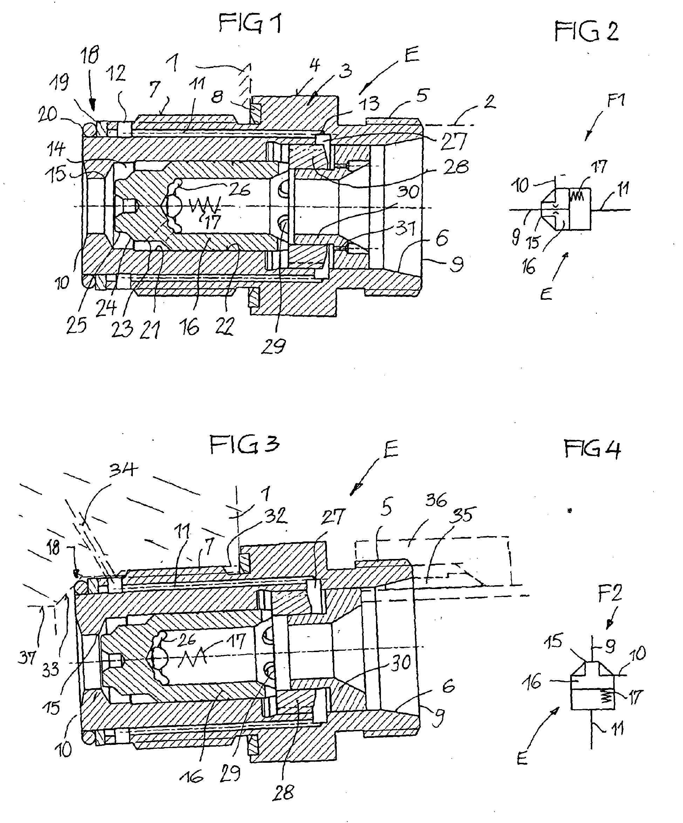

Fig. 1 zeigt eine Einschraubverschraubung E, beispielsweise zumindest in den Außenabmessungen entsprechend Vorschriften ISO 3691 oder DIN 3852, die einen Block 1, eine Leitung oder einen Schlauch 2 und einen Einschraubkörper 3 umfasst, der den Block 1 mit der Leitung oder dem Schlauch 2 hermetisch dicht verbindet (ERMETO-Prinzip). Der Einschraubkörper 3 besteht beispielsweise aus Stahl und weist eine Schraubhandhabe 4 in Form eines Sechskants sowie an beiden Seiten der Schraubhandhabe 4 Außengewindeabschnitte 5, 7 auf. Der Einschraubkörper 3 besitzt ein schlauch- oder leitungsseitiges Ende 9 sowie ein blockseitiges Ende 10, zwischen denen sich ein Längsdurchgang 14 erstreckt. An einer Seite der Schraubhandhabe 4 ist eine Dichtung 8, beispielsweise eine Weichmetalldichtung, vorgesehen, mit der der in eine Gewindebohrung 32 des Blocks 1 (Fig. 3) eingeschraubte Einschraubkörper 3 an der Außenseite oder einer Dichtfläche des Blocks 1 abdichtet. Zum Anschluss des Schlauches oder der Leitung 2 mit Hilfe einer Überwurfmutter 36 und eines Schneidrings 35 (Fig. 3) ist am Ende 9 des Einschraubkörpers 3 eine konische Mündung 6 ausgebildet.

Der Einschraubkörper 3 der Einschraubverschraubung E in Fig. 1 ist baulich für eine aktiv steuerbare Ventilfunktion F1 (Fig. 2) modifiziert, und zeichnet sich vor allem dadurch aus, dass im Einschraubkörper 3 ein Steuerkanal 11 ausgebildet ist, der sich von einer Mündung 12 am Außenumfang bis zu einer Mündung 13 im Längsdurchgang 14 erstreckt. Im Längsdurchgang 14 ist ein beispielsweise integral ausgebildeter Ventilsitz 15 (ein kegeliger Ventilsitz mit einer Dichtkante) geformt, der in der Ausführungsform in Fig. 1 beim blockseitigen Ende 10 und innerhalb der Längserstreckung des Einschraubkörpers 3 positioniert ist. Mit dem Ventilsitz 15 kann ein in einem Führungsabschnitt 21 des Längsdurchgangs 14 abgedichtet verschiebbares Ventilelement 16 zusammenwirken, das in der gezeigten Ausführungsform als Topfkolben ausgebildet und mit einem großdurchmessigen Dichtbereich 22 im Führungsabschnitt 21 angeordnet ist. An den Dichtbereich 22 schließt sich ein im Durchmesser verringertes Topfkolbenende 23 an, an dem eine konische Sitzfläche 24 (zur Zusammenarbeit mit dem Ventilsitz 15 in Sitzventilbauweise) angeformt ist. Die Sitzfläche 24 ist durch eine Eintauchverlängerung 25 verlängert, dessen Durchmesser in Eintauchrichtung in die Öffnung des Ventilsitzes 15 geringfügig abnimmt, um die Querschnittsfläche, die beim Hub des Ventilelements 16 geöffnet wird, hubabhängig variieren und damit die Durchflussmenge regulieren zu können. Zwischen einem Querdurchlässe 29 aufweisenden Hinterende des Ventilelements 16 und dem im Durchmesser verringerten Topfkolben-Vorderende 23 verlaufen mehrere Strömungsdurchgänge 26. In einem Innenraum des Ventilelements 16 kann eine Ventilschließfeder 17 angeordnet sein, die sich im Einschraubkörper 3 abstützt (nicht gezeigt).

Der Steuerkanal 11 hat seine innen liegende Mündung 13 in einer Ringkammer 27, in der ein Stellkolben 28, z. B. ein Ringkolben, abgedichtet verschieblich ist, der mit seinem Außenumfang an der Innenwand der Ringkammer 27 und mit seinem Innenumfang an einem hohlen Führungseinsatz 30 anliegt. Vom leitungs- oder schlauchseitigen Ende 9 des Längsdurchgangs 14 erstreckt sich mindestens ein Drosseldurchgang 31 durch den Führungseinsatz 30 in die Ringkammer 27.

Als weitere Modifikation für die wahlweise aktiv steuerbare Ventilfunktion F1 weist der Einschraubkörper 3 einen zusätzlichen Dichtbereich 18 am blockseitigen Ende 10 auf. Bei der gezeigten Ausführungsform wird dieser zusätzliche Dichtbereich 18 durch einen O-Ring oder einen Weichmetallring 20 und einen Abstützungs-Ring 19 gebildet, welcher sich an einer Schulter des Einschraubkörpers 3 abstützt. Alternativ und nicht gezeigt, könnte der zusätzliche Dichtbereich 18 auch durch eine Dichtschneidekante am blockseitigen Ende 10 gebildet werden, oder durch eine Fortführung des Außengewindes 7 oder einen separaten Dichtgewindeabschnitt (nicht gezeigt) bis zum blockseitigen Ende 10. Der zusätzliche Dichtbereich 18 isoliert das blockseitige Ende 10 des Längsdurchgangs 14 an einer Gegenfläche 33 im Block 1 (Fig. 3) von der Mündung 12 des Steuerkanals 11 weitgehend oder vollständig dicht.

Die in die Einschraubverschraubung E von Fig. 1 integrierte, aktiv steuerbare Ventilfunktion F1 ist die wahlweise Blockierung eines Rückschlagventils (Symbol in Fig. 2) in der Sperrstellung, das auch durch den am Ende 9 anstehenden Druck auf dem Ventilelement 16 in der (nicht gezeigten) Sperrstellung gehalten ist, wobei der Steuerkanal 11 abgesperrt, sein kann. Auch die Ventilschließfeder 17 wirkt in Schließrichtung. Der Steuerkanal 11 ist im Block 1 mit einem Steuerkanal 34 verbunden, der zu einer nicht gezeigten Steuerkomponente führt, die den Steuerkanal 11 bzw. 34 entweder absperrt oder freigibt oder mit Steuerdruck beaufschlagt.

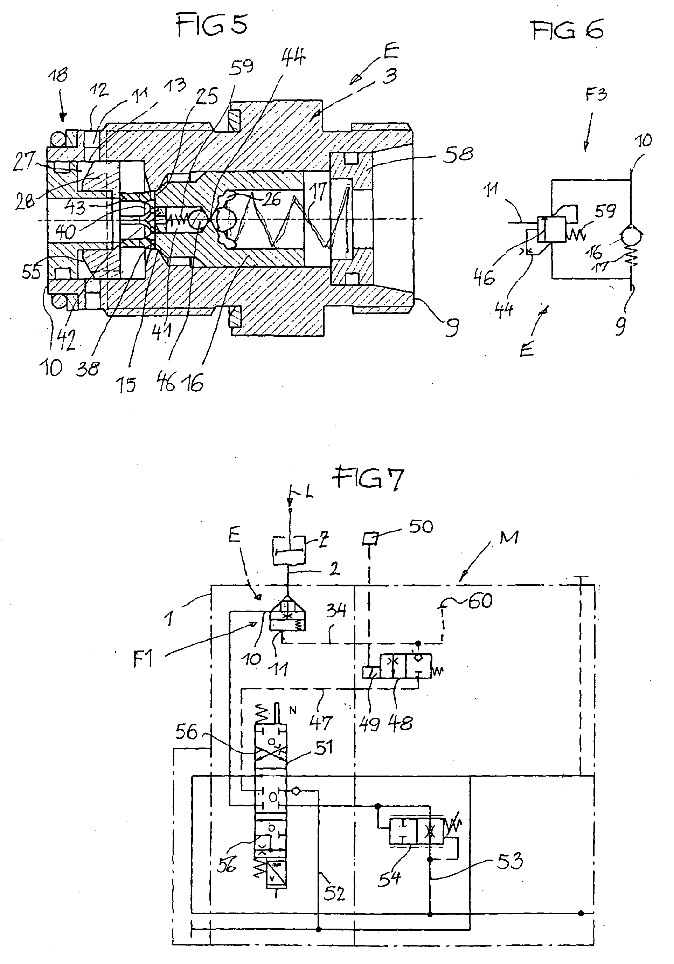

In der Einschraubverschraubung E von Fig. 1 und Fig. 2 führt das blockseitige Ende 10 des Längsdurchgangs 14 beispielsweise zu einem Steuerventil, während am Ende 9 ein Hydromotor (nicht gezeigt) angeschlossen ist, beispielsweise entsprechend Fig. 7. Solange der Steuerkanal 34 und damit der Steuerkanal 11 im Einschraubkörper 3 abgesperrt oder durchgängig sind, und im Ende 9 des Längsdurchgangs 14 der Druck aus dem Hydromotor ansteht, wird dieser Druck in der Sperrstellung des Rückschlagventils gehalten. Es wirkt in der Sperrstellung zwar auf der Kreisringfläche zwischen dem großen Dichtdurchmesser 22 und dem Sitzdurchmesser eine Kraftkomponente in Öffnungsrichtung. Diese kann die Sperrstellung jedoch nicht aufheben. Eine Entsperrung ist möglich, wenn am blockseitigen Ende 10 ein bestimmter Druck aufgebaut wird. Die Entsperrung lässt sich jedoch über den Steuerkanal 11 mit Steuerdruck blockieren.

Zum aktiv gesteuerten Blockieren der Entsperrung oder um das in der in Fig. 1 gezeigten Öffnungsstellung befindliche Ventilelement 16 in die Sperrstellung zu bringen und in dieser zu halten, wird der Steuerkanal 11 mit Steuerdruck beaufschlagt, so dass der Druck im Ringraum 27 steigt, da der Querschnitt der Drosseldurchgänge 31 kleiner ist als der Querschnitt der Steuerkanäle 11. Die Stellkraft des Stellkolbens 18 in Schließrichtung nimmt zu und wirkt auf das Ventilelement 16, wobei die Druckkraft in Öffnungsrichtung, des Ventilelements 16 auf der Kreisringfläche zwischen dem Dichtdurchmesser 22 und dem Ventilsitz 15 überwunden ist. Wird der Steuerkanal 11 wieder aktiv gesteuert oder abgesperrt, ist das Rückschlagventil wieder entsperrbar.

Am Vorderende 23 ist die Eintauchverlängerung 25 angeformt, die den Durchgangsquerschnitt durch den Ventilsitz 15 hubabhängig variiert, um beispielsweise eine Rampenfunktion beim Schließen oder Öffnen des Rückschlagventils zu erzielen.

In der Einschraubverschraubung E der Fig. 3 und 4 ist die in den Einschraubkörper 3 integrierte, Ventilfunktion die eines Rückschlagventils oder Lasthalteventils, das wahlweise und aktiv steuerbar durch Steuerdruckbeaufschlagung im Steuerkanal 11 mit dem Stellkolben 18 in die Sperrstellung bringbar und/oder in dieser haltbar und blockierbar ist. Erst bei Druckentlastung des Steuerkanals 11 kann das Rückschlagventil durch Druck vom Ende 10 geöffnet werden, sobald der Druck am Ende 10 um eine vorbestimmte Differenz höher wird als am der Druck am Ende 9.

In der Ausführungsform der Einschraubverschraubung E in den Fig. 5 und 6 ist die zusätzliche aktiv steuerbare Ventilfunktion F3 die eines Lasthalteventils mit Druckbegrenzung in Sperrrichtung, das sich durch Druck am Ende 10 öffnen lässt, und durch Steuerdruck im Steuerkanal 11 aktiv gesteuert geöffnet und/oder offengehalten wird. Durch dosierten Druckaufbau im Steuerkanal 11 kann sogar mit einer Mengenregelfunktion entsperrt werden. Der Steuerkanal 11 führt hier zu dem dem blockseitigen Ende des Längsdurchgangs 14 zugeordneten Ringraum 27 links vom Ventilsitz 15 mit dem darin innen und außen abgedichtet verschiebbar geführten Stellkolben 28, der an einer Rückseite 55 zum Erzeugen einer Öffnungskraft dient. Im gegenüberliegenden Ende des Längsdurchgangs ist ein Einsatz 58 als Widerlager für eine Schließfeder 17 des Ventilelements 16 enthalten. An die Eintauchverlängerung 25 schließen sich mehrere in Umfangrichtung verteilte Schenkel 43 an, zwischen denen Mengensteuerschlitze 40 definiert sein können. Die Schenkel 43 wirken auch mit dem Stellkolben 28 zusammen. Ferner sind ggf. in der Eintauchverlängerung 25 Querdurchgänge 38 vorgesehen. Die Mengensteuerschlitze 40 und/oder die Querdurchgänge 38 wirken mit der Sitzkante des Ventilsitzes 15 blendenartig zusammen, um eine Mengensteuerung ausführen zu können, bzw. den Querschnitt beim Hub des Ventilelements 16 hubabhängig zu variieren.

In einer Kammer 41 im Ventilelement 16 ist ein Druckbegrenzungsventil mit einem Schließglied 46, einen Sitz mit einem Drosseldurchgang 44, und einer Schließfeder 59 enthalten. Die Schließfeder 59 stützt sich auf einem Einsatzteil 42 mit einem Durchgang zum Ende 10 ab.

Am blockseitigen Ende 10 des Längsdurchgangs 14 ist beispielsweise über einen Kanal 37 (Fig. 3) ein nicht gezeigtes Steuerventil oder eine Druckquelle angeschlossen, während am gegenüberliegenden Ende 9 des Längsdurchgangs 14 ein Hydromotor angeschlossen sein kann.

Solange der Steuerkanal 11 und das Ende 10 druckentlastet sind und das Lasthalteventil in der in Fig. 5 gezeigten Sperrstellung ist, wird die Last des Hydromotors leckagefrei gehalten. Übersteigt der Lastdruck einen bestimmten Wert, dann öffnet in der Sperrstellung des Lasthalteventils das Druckbegrenzungsventil selbsttätig, um den Druck über den Drosselkanal 44 zu begrenzen. Wird am blockseitigen Ende 10 des Längsdurchgangs 14 über das Steuerventil ausreichender Druck aufgebaut, so öffnet das Lasthalteventil gegen die Schließfeder 17, um eine Strömung durch den Ventilsitz 15 und die Strömungsdurchgänge 26 zum anderen Ende 9 des Längsdurchgangs 14 und zum Hydromotor zu ermöglichen.

Das Lasthalteventil lässt sich aktiv wahlweise durch Druckbeaufschlagen des Steuerkanals 11 entsperren und offenhalten. Es wirkt dann der Steuerdruck im Ringraum 27 auf der Ringfläche des Stellkolbens 28 in Öffnungsrichtung des Ventilelements 16, das über die Schenkel 43 verschoben wird. Dann kann Druckmittel vom Hydromotor durch den Ventilsitz 15 abströmen. Dies aktive Entsperrung kann vollständig vorgenommen werden, oder indem der Steuerdruck im Steuerkanal 11 feinfühlig variiert wird, so dass mit der Mengensteuereinrichtung zwischen dem Ventilelement 16 und dem Ventilsitz 15 nur eine bestimmte Menge strömt. Ferner kann das Lasthalteventil mit Steuerdruck im Steuerkanal 11 offengehalten werden, bis der Steuerdruck entlastet wird.

Fig. 7 zeigt als Blockschaltbild die Integration der Einschraubverschraubung E der Fig. 1 und 2 mit der Ventilfunktion F1 eines durch Druckbeaufschlagung des Steuerkanals 11 in der Sperrstellung blockierten Rückschlagventils in einen Hubsteuermodul M z. B. eines Gabelstaplers, dessen Hydromotor beispielsweise ein einseitig gegen eine Last L beaufschlagbarer Hubzylinder Z ist, der über die Leitung oder den Schlauch 2 mittels der Einschraubverschraubung E an den Block 1 angeschlossen ist. In dem (einteiligen oder mehrteiligen) Block 1 sind ein Richtungssteuerventil 51, ein Magnetschaltventil 48 mit einem Schwarz/Weiß-Schaltmagneten 49, ggf. eine Ablauf-Druckwaage 54, eine Druckleitung 52, eine Rücklaufleitung 53 sowie der auch in Fig. 3 angedeutete Steuerkanal 34 ggf. mit einem Steuerdruck-Anschluss 60 vorgesehen, der den Steuerkanal 11 der Einschraubverschraubung E mit dem Magnetschaltventil 48 verbindet. Das Magnetschaltventil 48 ist entweder direkt mit der Rücklaufleitung 53 verbunden, oder, wie gezeigt, über eine Leitung 47, die in der gezeigten Neutralstellung O des Richtungssteuerventils 51 abgesperrt, hingegen in jeder Steuerstellung a oder b des Richtungssteuerventils 51 über einen Strömungsweg 56 mit der Rücklaufleitung 53 bzw. der Ablauf-Druckwaage 54 verbunden ist. Der Schaltmagnet 49 des Magnetschaltventils 48 ist elektrisch mit einem Sitzbelegungsschalter und/oder Notaus-Schalter und/oder Betriebsschalter 50 verbunden, und zwar derart, dass der Magnet 49 bei Betätigung des Sitzbelegungsschalters, bei nicht betätigtem Notaus-Schalter und bei betätigtem Betriebsschalter 50 bestromt und das Magnetschaltventil 48 in der Durchgangsstellung ist. Hingegen nimmt das Magnetschaltventil 48 unter Federkraft die gezeigte Absperrstellung ein, wenn der Notaus-Schalter betätigt ist und/oder der Sitzbelegungsschalter keine Sitzbelegung meldet, und/oder der Betriebsschalter nicht eingeschaltet ist.

In der Durchgangsstellung des Magnetschaltventils 48 wird der Steuerkanal 11 nur dann druckentlastet, wenn das Richtungssteuerventil 51 in eine der Steuerstellungen a, b verstellt wird. Hingegen steht Steuerdruck im Steuerkanal 11 an, solange das Richtungssteuerventil 51 in der gezeigten abgesperrten Neutralstellung O steht. Die Sicherheitsfunktion, die durch die Einschraubverschraubung E in Fig. 7 erzielt wird, besteht darin, dass eine ungewollte Verstellung des Hubzylinders Z weder gegen die Last L noch unter der Last L vermieden wird, wenn in Abwesenheit des Staplerfahrers bei gedrücktem Notaus-Schalter oder ausgeschaltetem Betriebsschalter 50 das Richtungssteuerventil 51 z. B. aus Versehen betätigt wird, und noch Druck im System herrscht. In diesem Fall wird der Steuerdruck im Steuerkanal 11 gehalten, weil das Magnetschaltventil 48 in der Sperrstellung steht. Unter dem Lastdruck aus dem Hubzylinder Z und/oder durch Steuerdruck aus dem Anschluss 60 wird das Ventilelement 16 in der Sperrstellung blockiert.

Im Normalbetrieb des Gabelstaplers, d. h., wenn der Sitzbelegungsschalter 50 eine ordnungsgemäße Sitzbelegung meldet, der Notaus-Schalter nicht betätigt ist, und/oder der Betriebsschalter eingeschaltet ist, dann ist das Magnetschaltventil 48 in der Durchgangsstellung, so dass nur in der abgesperrten Neutralstellung O des Richtungssteuerventils 51 Steuerdruck im Steuerkanal 11 ansteht und das Ventilelement 16 in der Sperrstellung blockiert wird. Sobald dann das Richtungssteuerventil 51 in eine Steuerstellung a oder b verstellt wird, wird der Steuerdruck im Steuerkanal 11 über den Strömungsweg 56 zum Rücklauf bzw. zur Rücklaufleitung 53 abgebaut, so dass das Rückschlagventil entsperren und sich der Hubzylinder Z in der Steuerstellung a gegen die Last.L ausfahren und in der Steuerstellung b unter der Last L einfahren lässt.

## Patentansprüche

1. Einschraubverschraubung (E) mit Ventilfunktion zwischen einem Block (1) und einem Schlauch oder einer Leitung (2), insbesondere für die Hochdruck-Hydraulik, wobei die Einschraubverschraubung (E) einen in seinen Außenabmessungen weitestgehend standardisierten oder genormten Einschraubkörper (3) mit beidendigen Gewindeabschnitten (5, 7), einer dazwischen liegenden Schraubhandhabe (4), und einem Längsdurchgang (14) aufweist, und der Einschraubkörper (3) für die Ventilfunktion zumindest mit einem Ventilsitz (15) im Längsdurchgang (14) und einem relativ zum Ventilsitz (15) längsbeweglichen, federbelasteten Ventilelement (16) modifiziert ist, das ein am Außenumfang mit einem größeren Dichtdurchmesser (22) als dem Innendurchmesser des Ventilsitzes (15) in einem Führungsabschnitt (21) des Längsdurchgangs (14) verschiebbar geführter Topfkolben ist, der ein gegenüber dem Dichtdurchmesser (22) im Außendurchmesser verringertes Topfkolbenende (23) mit einer konischen Sitzfläche (24) und Strömungsdurchgänge (26) vom Topfkolben-Hinterende zum Topfkolbenende (23) aufweist, wobei der Einschraubkörper (3) für eine wahlweise aktiv steuerbare Ventilfunktion (F1, F2, F3) mit zumindest einem vom Außenumfang des Einschraubkörpers (3) zum Längsdurchgang (14) führenden Steuerkanal (11) ausgebildet ist, **dadurch gekennzeichnet, dass** am Topfkolbenende (23) angrenzend an die Sitzfläche (24) zur Durchflussmengenregelung durch den Ventilsitz (15) eine bei aufgesetzter Sitzfläche (24) in den Ventilsitz (15) eintauchende Eintauchverlängerung (25) vorgesehen ist, deren Außendurchmesser in etwa dem Innendurchmesser des Ventilsitzes (15) entspricht.

2. Einschraubverschraubung nach Anspruch 1, **dadurch gekennzeichnet, dass** sich die Eintauchverlängerung (25) in einem Axialschnitt in Eintauchrichtung verjüngt.

3. Einschraubverschraubung nach Anspruch 1, **dadurch gekennzeichnet, dass** von der Eintauchverlängerung (25) durch den Ventilsitz (15) greifende, in Umfangsrichtung verteilte Schenkel (39) vorstehen, zwischen denen Mengensteuerschlitze (40) definiert sind, und dass in der Eintauchverlängerung (25) Mengensteuerdurchgänge (38) vorgesehen sind.

4. Einschraubverschraubung nach Anspruch 1, **dadurch gekennzeichnet, dass** in der Eintauchverlängerung (25) des Ventilelementes (16) eine innen liegende Kammer (41) vorgesehen ist, die ein Druckbegrenzungsventil enthält und an einer Seite mit dem blockseitigen Ende (10) des Längsdurchgangs (14) und an der anderen Seite über einen Drosseldurchgang (44) mit dem Hinterende des Ventilelementes (16) kommuniziert.

5. Einschraubverschraubung nach Anspruch 1, **dadurch gekennzeichnet, dass** die wahlweise aktiv steuerbare Ventilfunktion (F1, F2, F3) der Einschraubverschraubung (E) eine entweder mit Steuerdruck-Beaufschlagung des Steuerkanals (11) blockierbare Rückschlagventilfunktion oder eine mit Steuerdruck-Beaufschlagung des Steuerkanals (11) dosierte Entsperrung einer Rückschlagventilfunktion oder einer Lasthalteventilfunktion mit Druckbegrenzung in Sperrrichtung ist.

6. Einschraubverschraubung nach Anspruch 1, **dadurch gekennzeichnet, dass** der Steuerkanal (11) im Längsdurchgang (14) an der Blockseite oder an der der Blockseite abgewandten Seite in einem Ringraum (27) mündet, in dem ein vom Ventilelement (16) baulich getrennter Ventilelement-Stellkolben (28) abgedichtet verschiebbar angeordnet ist, der in dem Ringraum (27) eine vom Steuerdruck im Steuerkanal (11) entweder in Schließ- oder in Öffnungsrichtung des Ventilelements (16) beaufschlagbare Ringfläche (55) definiert.

7. Einschraubverschraubung nach Anspruch (6), **dadurch gekennzeichnet, dass** der Ringraum (27) über einen Drosseldurchgang (31) mit dem Längsdurchgang (14) verbunden ist.

8. Einschraubverschraubung nach wenigstens einem der vorhergehenden Ansprüche, **dadurch gekennzeichnet, dass** die Einschraubverschraubung (E) mit der Ventilfunktion (F1) des wahlweise aktiv durch Steuerdruckbeaufschlagung entsperrbaren Rückschlagventils in einem Ventilblock (1) eines Hubsteuermoduls (M) eines Gabelstaplers angeordnet ist, dass an der dem Ventilsitz (15) abgewandten Seite des Einschraubkörpers (3) die Leitung (2) zu einem Hubzylinder (Z) und an der dem Ventilsitz (15) zugewandten Seite des Einschraubkörpers (3) ein Richtungssteuerventil oder eine Druckquelle (51) angeschlossen sind, und dass der mit dem Steuerdruck beaufschlagbare Steuerkanal (11) über ein mit einem Notaus-Schalter und/oder einem Sitzbelegungsschalter und/oder einem Betriebsschalter (50) des Gabelstaplers verbundenes Magnetschaltventil (48, 49) an eine Rücklaufleitung (53) über einen Strömungsweg (56) des Richtungssteuerventils (51) angeschlossen ist.

## Claims

1. Screw-in screw connection (E) including a valve function between a block (1) and a hose or a pipeline (2), in particular for high pressure hydraulic applications, wherein the screw-in screw connection (E) comprises a screw-in body (3) having outer dimensions which are largely standardised, the screw-in body (3) having thread sections (5, 7) at both ends, a screwing handle (4) in-between, and a longitudinal passage (14), the screw-in body (3) being modified for the valve function at least with a valve seat (15) in the longitudinal passage (14) and a valve element (16) which is spring loaded and moveable in longitudinal direction relative to the valve seat (15), the valve element (16) being a pot-shaped piston which is slidably guided at the outer periphery with a larger sealing diameter (22) than the inner diameter of the valve seat (15) within a guiding section (21) of the longitudinal passage (14), the pot-shaped piston having a piston end (23) with an outer diameter decreased in relation to the sealing diameter (22), and a conical seat surface (24) and flow passages (26) from the rear end of the piston to the end (23), the screw-in body (3) being formed for a selectively actively controllable valve function (F1, F2, F3) with at least one pilot channel (11) extending from the outer periphery of the screw-in body (3) to the longitudinal passage (14), **characterised in that** at the end (23) of the pot-shaped piston and adjacent to the seat surface (24) a dive-in extension (25) is provided for achieving flow quantity regulation in the valve seat (15), which dive-in extension (25) dives into the valve seat (15) when the seat surface (24) is seated on the valve seat (15), the outer diameter of the dive-in extension (25) substantially corresponding to the diameter of the valve seat (15).

2. Screw-in screw connection according to claim 1, **characterised in that** in an axial section the dive-in extension (25) is tapered in dive-in direction.

3. Screw-in screw connection according to claim 1, **characterised in that** legs (39) distributed in circumferential direction protrude from the dive-in extension and extend through the valve seat (15), that the legs (39) define flow quantity control slots (40) which are located between the legs (39), and that flow quantity control passages (38) are provided in the dive-in extension (25).

4. Screw-in screw connection according to claim 1, **characterised in that** an interiorly located chamber (41) is provided in the dive-in extension (25) of the valve element (16), which chamber (41) accommodates a pressure limiting valve and communicates at one side with the end (10) of the longitudinal passage (14) at the side of the block and at the other side via a throttling passage (44) with the rear end of the valve element (16).

5. Screw-in screw connection according to claim 1, **characterised in that** the selectively actively controllable valve function (F1, F2, F3) of the screw-in screw connection (E) is either a check valve function which can be brought into a blocking condition by pilot pressure actuation of the pilot channel (11) or is a check valve function or a load holding valve function including a pressure limiting function in a blocking direction, which check valve function or load holding valve function can be brought in dosed fashion into an unlocked condition by pilot pressure actuation of the pilot channel (11).

6. Screw-in screw connection according to claim 1, **characterised in that** the pilot channel (11) leads in the longitudinal passage (14) to an annular space (27) located at the side of the block or at the side remote from the block, that a sealed valve element adjusting piston (28) structurally separated from the valve element (16) is slidably arranged in the annular space (27), and that the valve element adjustment piston (18) defines an annular surface (55) in the annular space (27) which annular surface is actuated by pilot pressure from the pilot channel (11) either in closing direction or in opening direction of the valve element (16).

7. Screw-in screw connection according to claim 6, **characterised in that** the annular space (27) is connected via a throttled passage (31) with the longitudinal passage (14).

8. Screw-in screw connection according to at least one of the preceding claims, **characterised in that** the screw-in screw connection (E) having the valve function (F1) of the check valve which selectively and actively can be unlocked by pilot pressure actuation is arranged in a valve block (1) of a lift control module (M) of a forklift truck, that the pipeline (2) extending to a lifting cylinder (Z) is connected with the side of the screw-in body (3) remote from the valve seat (15), that a directional control valve or a pressure source (51) is connected with the side of the screw-in body (3) facing to the valve seat (15), and that the pilot channel (11) which can be actuated with pilot pressure is connected via a flow path (56) of the directional control valve (51) and a solenoid switching valve (48, 41) to a return line (53), the solenoid switching valve (48, 49) being connected with an emergency stop switch and/or a seat occupation signalling switch and/or an operation switch (50) of the forklift truck.

## Revendications

1. Raccord à visser (E) avec fonction de soupape entre un bloc (1) et un tuyau flexible ou une conduite (2), notamment pour l'hydraulique à haute pression,
le raccord à visser (E) comportant un corps fileté (3) aux dimensions extérieures très largement standardisées ou normalisées avec des tronçons filetés (5, 7) aux deux extrémités, une prise de vissage (4) située entre les deux ainsi qu'un passage longitudinal (14)
et le corps fileté (3) étant modifié pour la fonction de soupape au moins avec un siège de soupape (15) dans le passage longitudinal (14) et avec un élément de soupape (16) qui est commandé par ressort et mobile dans le sens de la longueur par rapport au siège de soupape (15) et qui est un piston en cloche qui est guidé mobile sur la circonférence extérieure avec un diamètre d'étanchéité (22) supérieur au diamètre intérieur du siège de soupape (15) dans un tronçon de guidage (21) du passage longitudinal (14) et qui comporte une extrémité de piston en cloche (23) avec un diamètre extérieur réduit par rapport au diamètre d'étanchéité (22) et avec une surface d'assise conique (24) ainsi que des passages d'écoulement (26) de l'extrémité arrière de piston en cloche à l'extrémité de piston en cloche (23),
le corps fileté (3) étant conçu pour une fonction de soupape (F1, F2, F3) qui peut être commandée de manière active et optionnelle et qui a au moins un canal de commande (11) menant de la circonférence extérieure du corps fileté (3) au passage longitudinal (14),
**caractérisé en ce qu'**il est prévu à l'extrémité de piston en cloche (23) et de manière adjacente à la surface d'assise (24), pour la régulation du débit par le siège de soupape (15), un prolongement plongeant (25) qui plonge dans le siège de soupape (15) lorsque la surface d'assise (24) est posée et dont le diamètre extérieur correspond sensiblement au diamètre intérieur du siège de soupape (15).

2. Raccord à visser selon la revendication 1, **caractérisé en ce que** le prolongement plongeant (25) se rétrécit en coupe axiale dans la direction de la plongée.

3. Raccord à visser selon la revendication 1, **caractérisé en ce que** des branches (39), prenant par le siège de soupape (15) et réparties sur toute la circonférence, font saillie sur le prolongement plongeant (25), branches entre lesquelles sont définies des fentes de commande de débit (40), et **en ce que** des passages de commande de débit (38) sont prévus dans le prolongement plongeant (25).

4. Raccord à visser selon la revendication 1, **caractérisé en ce qu'**il est prévu dans le prolongement plongeant (25) de l'élément de soupape (16) une chambre (41), placée à l'intérieur, qui contient une soupape limitant la pression et qui communique d'un côté avec l'extrémité côté bloc (10) du passage longitudinal (14) et de l'autre côté par l'intermédiaire d'un passage à étranglement (44) avec l'extrémité arrière de l'élément de soupape (16).

5. Raccord à visser selon la revendication 1, **caractérisé en ce que** la fonction de soupape (F1, F2, F3), qui peut être commandée de manière active et optionnelle, du raccord à visser (E) est une fonction de soupape de non-retour pouvant être bloquée avec une application de pression de commande du canal de commande (11) ou un déblocage, dosé avec une application de pression de commande du canal de commande (11), d'une fonction de soupape de non-retour ou d'une fonction de soupape de maintien de charge avec limitation de pression dans le sens du blocage.

6. Raccord à visser selon la revendication 1, **caractérisé en ce que** le canal de commande (11) débouche dans le passage longitudinal (14), du côté du bloc ou du côté opposé au côté du bloc, dans un espace annulaire (27) dans lequel est agencé, de manière mobile et étanche, un piston de réglage d'élément de soupape (28) dont la construction est séparée de l'élément de soupape (16) et qui définit dans l'espace annulaire (27) une surface annulaire (55) pouvant être soumise à la pression de commande dans le canal de commande (11) dans le sens soit de la fermeture soit de l'ouverture de l'élément de soupape (16).

7. Raccord à visser selon la revendication 6, **caractérisé en ce que** l'espace annulaire (27) est relié au passage longitudinal (14) par un passage à étranglement (31).

8. Raccord à visser selon au moins l'une des revendications précédentes, **caractérisé en ce que** le raccord à visser (E) avec la fonction de soupape (F1) de la soupape de non-retour pouvant être débloquée de manière active et optionnelle par une application de pression de commande est agencé dans un bloc de soupape (1) d'un module de commande de levage (M) d'un chariot élévateur à fourche, **en ce que**, sur celui des côtés du corps fileté (3) qui est éloigné du siège de soupape (15), la conduite (2) est raccordée à un cylindre de levage (Z) et, sur celui des côtés du corps fileté (3) qui est proche du siège de soupape (15), une soupape de commande de sens ou une source de pression (51) est raccordée et **en ce que** le canal de commande (11) pouvant être soumis à la pression de commande est raccordé, par l'intermédiaire d'une soupape à commutation magnétique (48, 49) reliée à un interrupteur d'urgence et/ou à un interrupteur d'occupation de siège et/ou à un interrupteur de fonctionnement (50) du chariot élévateur à fourche, à une conduite de retour (53) par l'intermédiaire d'un trajet d'écoulement (56) de la soupape de commande de sens (51) .
